(19) **Europäisches Patentamt / European Patent Office / Office européen des brevets**

(11) **EP 4 481 009 A1**

(12) **EUROPEAN PATENT APPLICATION**
published in accordance with Art. 153(4) EPC

(43) Date of publication:
**25.12.2024 Bulletin 2024/52**

(21) Application number: **23756466.1**

(22) Date of filing: **17.02.2023**

(51) International Patent Classification (IPC):
**C09D 133/14** (2006.01)   **C09D 201/06** (2006.01)
**C09D 7/63** (2018.01)

(52) Cooperative Patent Classification (CPC):
**C09D 7/63; C09D 133/14; C09D 201/06**

(86) International application number:
**PCT/JP2023/005646**

(87) International publication number:
**WO 2023/157942 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.02.2022 JP 2022023343**

(71) Applicant: **Kansai Paint Co., Ltd.**
**Amagasaki-shi, Hyogo 661-8555 (JP)**

(72) Inventors:
• **HYODO, Nobuyuki**
  **Miyoshi-shi, Aichi 470-0206 (JP)**
• **OGINO, Shinichi**
  **Miyoshi-shi, Aichi 470-0206 (JP)**

(74) Representative: **Müller-Boré & Partner**
**Patentanwälte PartG mbB**
**Friedenheimer Brücke 21**
**80639 München (DE)**

(54) **COATING COMPOSITION AND METHOD FOR FORMING COATING FILM**

(57)   Provided are a coating composition including: (A) a hydroxy group-containing resin; (B) a polyisocyanate compound; (C) an organometallic catalyst formed of a zinc compound and an amidine compound; and (D) a phosphate group-containing compound, and a coating film forming method including: coating a top of a material to be coated with the above-mentioned coating composition to form a coating film; and then heating the coating film to cure the coating film.

**EP 4 481 009 A1**

## Description

Technical Field

The present invention relates to a coating composition and a coating film forming method.

Background Art

In the coating of an automobile body or the like, in recent years, development toward the shortening of a bake curing step has been actively performed from the viewpoints of energy savings and the alleviation of an environmental load.

In the shortening of the bake curing step, there have been growing demands for a reduction in temperature in a curing step and the shortening of a time period therefor. As a coating composition for satisfying such demands for low-temperature and short-time curing, a hydroxy group/isocyanate group-crosslinked coating composition, in which a hydroxy group-containing resin is cured by using a polyisocyanate compound as a curing agent, has been investigated.

An organotin compound has been generally used as a catalyst that accelerates the curing reaction of the above-mentioned hydroxy group/isocyanate group-crosslinked coating composition (Patent Literature 1).

However, the toxicity of the organotin compound has become a problem in recent years, though the catalytic performance thereof is extremely high. Accordingly, a catalyst that replaces the organotin compound has been required.

In addition, the hydroxy group/isocyanate group-crosslinked coating composition is typically used by mixing a main agent containing the hydroxy group-containing resin and a curing agent containing the polyisocyanate compound. To secure a working time after the mixing, an excellent pot life has been required.

In Patent Literature 2, there is a description that a coating composition having the following features can achieve both of excellent low-temperature and short-time curability, and a pot life, and can provide a cured coating film excellent in finished appearance: the composition contains (A) a secondary hydroxy group-containing acrylic resin that is a copolymer of monomer components formed of 20 mass% to 50 mass% of (a) a secondary hydroxy group-containing polymerizable unsaturated monomer and 50 mass% to 80 mass% of (b) any other polymerizable unsaturated monomer, (B) a polyisocyanate compound, and (C) an organometallic catalyst formed of (C1) a metal compound whose metal is one kind selected from the group consisting of: zinc; tin; zirconium; bismuth; lead; cobalt; manganese; titanium; aluminum; and molybdenum, and (C2) an amidine compound; and the equivalent ratio (NCO/OH) of an isocyanate group in the polyisocyanate compound (B) to a hydroxy group in the secondary hydroxy group-containing acrylic resin (A) falls within the range of from 0.8 to 1.8. In recent years, however, a coating composition having a more excellent pot life has been desired.

Citation List

Patent Literature

[0008]

　　PTL 1: JP 2002-338885 A
　　PTL 2: WO 2013/04720 A1

Summary of Invention

Technical Problem

An object to be achieved by the present invention is to provide a coating composition that is excellent in low-temperature and short-time curability, and has an excellent pot life without using any organotin compound.

Solution to Problem

The inventors of the present invention have made extensive investigations with a view to achieving the above-mentioned object, and as a result, have found that the above-mentioned object can be achieved with a coating composition including: (A) a hydroxy group-containing resin; (B) a polyisocyanate compound; (C) an organometallic catalyst formed of a zinc compound and an amidine compound; and (D) a phosphate group-containing compound.

According to the present invention, there are provided a coating composition and a coating film forming method including the following aspects.

Item 1. A coating composition including: (A) a hydroxy group-containing resin; (B) a polyisocyanate compound; (C) an organometallic catalyst formed of a zinc compound and an amidine compound; and (D) a phosphate group-containing compound.

Item 2. The coating composition according to Item 1, wherein the hydroxy group-containing resin (A) contains a hydroxy group-containing acrylic resin (A1).

Item 3. The coating composition according to Item 2, wherein the hydroxy group-containing acrylic resin (A1) contains a primary hydroxy group-containing acrylic resin (A11).

Item 4. The coating composition according to any one of Items 1 to 3, wherein the phosphate group-containing compound (D) contains an alkyl phosphate (D1) and/or a phosphate group-containing resin (D2).

Item 5. A coating film forming method including: coating a top of a material to be coated with the coating composition of any one of Items 1 to 4 to form a coating film; and then heating the coating film to cure the coating film.

Advantageous Effects of Invention

The coating composition of the present invention is excellent in low-temperature and short-time curability, and has an excellent pot life without using any organotin compound.

Description of Embodiments

In this description, a singular form (e.g., a, an, or the) includes the singular form and a plural form except for a case in which explicit description is separately present in this description or a case in which an apparent contradiction in context occurs. A coating composition of the present invention (hereinafter sometimes abbreviated as "this coating") is described in more detail below.

The coating composition of the present invention is a coating composition including: (A) a hydroxy group-containing resin; (B) a polyisocyanate compound; (C) an organometallic catalyst formed of a zinc compound and an amidine compound; and (D) a phosphate group-containing compound.

Hydroxy Group-containing Resin (A)

The hydroxy group-containing resin (A) is a resin having at least one hydroxy group in a molecule thereof. A wide variety of known resins may each be used as the hydroxy group-containing resin (A), and examples thereof include resins, such as an acrylic resin having a hydroxy group, a polyester resin having a hydroxy group, an acrylic-modified polyester resin having a hydroxy group, a polyether resin having a hydroxy group, a polycarbonate resin having a hydroxy group, a polyurethane resin having a hydroxy group, an epoxy resin having a hydroxy group, and an alkyd resin having a hydroxy group. Those resins may be used alone or in combination thereof. Especially, the hydroxy group-containing resin (A) preferably contains a hydroxy group-containing acrylic resin (A1) from the viewpoint of the water resistance of a coating film to be formed, and the like.

Hydroxy Group-containing Acrylic Resin (A1)

The hydroxy group-containing acrylic resin (A1) may be obtained by, for example, copolymerizing a hydroxy group-containing polymerizable unsaturated monomer and any other polymerizable unsaturated monomer (a polymerizable unsaturated monomer except the hydroxy group-containing polymerizable unsaturated monomer).

The above-mentioned hydroxy group-containing polymerizable unsaturated monomer is a compound having one or more hydroxy groups and one or more polymerizable unsaturated bonds in a molecule thereof. Examples of the hydroxy group-containing polymerizable unsaturated monomer may include: monoester compounds of (meth)acrylic acid and dihydric alcohols each having 2 to 8 carbon atoms, such as 2-hydroxyethyl (meth)acrylate, 2-hydroxypropyl (meth)acrylate, 3-hydroxypropyl (meth)acrylate, and 4-hydroxybutyl (meth)acrylate; ε-caprolactone-modified products of the monoester compounds of (meth)acrylic acid and the dihydric alcohols each having 2 to 8 carbon atoms; adducts of (meth)acrylic acid and epoxy group-containing compounds (e.g., "CARDURA E10P" (product name), manufactured by Hexion, Inc., glycidyl neodecanoate); N-hydroxymethyl (meth)acrylamide; allyl alcohol; and (meth)acrylates each having a polyoxyethylene chain having a hydroxy group at a molecular terminal thereof.

For example, monomers described in the following items (1) to (6) may each be used as the other polymerizable unsaturated monomer copolymerizable with the above-mentioned hydroxy group-containing polymerizable unsaturated monomer. Those polymerizable unsaturated monomers may be used alone or in combination thereof.

(1) Acid Group-containing Polymerizable Unsaturated Monomer

An acid group-containing polymerizable unsaturated monomer is a compound having one or more acid groups and one or more polymerizable unsaturated bonds in a molecule thereof. Examples of the monomer may include: carboxyl group-containing monomers, such as (meth)acrylic acid, crotonic acid, itaconic acid, maleic acid, and maleic anhydride; and sulfonic acid group-containing monomers, such as vinylsulfonic acid and 2-sulfoethyl (meth)acrylate. Those monomers may be used alone or in combination thereof. When the acid group-containing polymerizable unsaturated monomer is used, its amount is set so that the acid value of the hydroxy group-containing acrylic resin (A1) may be preferably from 0.5 mgKOH/g to 15 mgKOH/g, more preferably from 1 mgKOH/g to 12 mgKOH/g.

(2) Ester Compound of Acrylic Acid or Methacrylic Acid and Monohydric Alcohol having 1 to 20 Carbon Atoms

An ester compound of acrylic acid or methacrylic acid and a monohydric alcohol having 1 to 20 carbon atoms may be specifically, for example, methyl (meth)acrylate, ethyl (meth)acrylate, propyl (meth)acrylate, n-butyl (meth)acrylate, isobutyl (meth)acrylate, tert-butyl (meth)acrylate, 2-ethylhexyl (meth)acrylate, isooctyl (meth)acrylate, isomyristyl (meth)acrylate, stearyl (meth)acrylate, isostearyl acrylate (manufactured by Osaka Organic Chemical Industry Ltd., product name), lauryl (meth)acrylate, tridecyl (meth)acrylate, tetrahydrofurfuryl (meth)acrylate, cyclohexyl (meth)acrylate, or isobornyl (meth)acrylate.

(3) Aromatic Vinyl Monomer

An aromatic vinyl monomer may be specifically, for example, styrene, α-methylstyrene, or vinyltoluene.
When the aromatic vinyl monomer is used as a constituent, the glass transition temperature of the resin to be obtained is increased, and a hydrophobic coating film having a high refractive index can be obtained. Accordingly, a finished appearance-improving effect exhibited by an improvement in gloss of the coating film can be obtained.
When the aromatic vinyl monomer is used as a constituent, its blending ratio falls within the range of preferably from 3 mass% to 50 mass%, more preferably from 5 mass% to 40 mass% with respect to the total amount of monomer components.

(4) Glycidyl Group-containing Polymerizable Unsaturated Monomer

A glycidyl group-containing polymerizable unsaturated monomer is a compound having one or more glycidyl groups and one or more polymerizable unsaturated bonds in a molecule thereof. Specific examples thereof may include glycidyl acrylate and glycidyl methacrylate.

(5) Polymerizable Unsaturated Bond-containing Nitrogen Atom-containing Compound

A polymerizable unsaturated bond-containing nitrogen atom-containing compound may be, for example, (meth)acrylamide, N,N-dimethyl (meth)acrylamide, N-[3-(dimethylamino)propyl] (meth)acrylamide, N-butoxymethyl (meth)acrylamide, diacetone (meth)acrylamide, N,N-dimethylaminoethyl (meth)acrylate, vinylpyridine, vinylimidazole, acrylonitrile, or methacrylonitrile.

(6) Other Vinyl Compound

Any other vinyl compound may be, for example, vinyl acetate, vinyl propionate, vinyl chloride, or a vinyl versatate. Examples of the vinyl versatate may include commercial products "VeoVa 9" and "VeoVa 10" (which are product names, manufactured by Hexion, Inc.).
The term "polymerizable unsaturated monomer" as used herein refers to a monomer having one or more (e.g., 1 to 4) polymerizable unsaturated groups. The term "polymerizable unsaturated group" means an unsaturated group that may undergo radical polymerization. Examples of such polymerizable unsaturated group include a vinyl group, a (meth)acryloyl group, a (meth)acrylamide group, a vinyl ether group, an allyl group, a propenyl group, an isopropenyl group, and a maleimide group.
In addition, the term "(meth)acrylate" as used herein means acrylate or methacrylate. The term "(meth)acrylic acid" means acrylic acid or methacrylic acid. In addition, the term "(meth)acryloyl" means acryloyl or methacryloyl. In addition, the term "(meth)acrylamide" means acrylamide or methacrylamide.
The hydroxyl value of the above-mentioned hydroxy group-containing acrylic resin (A1) falls within the range of preferably from 20 mgKOH/g to 200 mgKOH/g, more preferably from 25 mgKOH/g to 180 mgKOH/g, particularly preferably from 30 mgKOH/g to 160 mgKOH/g from the viewpoints of the pot life, and low-temperature and short-time curability of the coating composition, and the like.

In addition, the weight-average molecular weight of the above-mentioned hydroxy group-containing acrylic resin (A1) falls within the range of preferably from 2,000 to 50,000, more preferably from 3,000 to 40,000, particularly preferably from 4,000 to 30,000 from the viewpoints of the pot life, and low-temperature and short-time curability of the coating composition, and the like.

The term "weight-average molecular weight" as used herein refers to a value calculated from a chromatogram measured with a gel permeation chromatograph with respect to the molecular weight of standard polystyrene. "HLC-8120GPC" (manufactured by Tosoh Corporation) was used as the gel permeation chromatograph. Four columns "TSKgel G-4000HXL," "TSKgel G-3000HXL," "TSKgel G-2500HXL," and "TSKgel G-2000HXL" (all of which were manufactured by Tosoh Corporation, product names) were used as columns, and the measurement was performed under the following conditions: tetrahydrofuran was used as a mobile phase; a measurement temperature was set to 40°C; a flow rate was set to 1 cc/min; and a RI detector was used as a detector.

In addition, the glass transition temperature of the hydroxy group-containing acrylic resin (A1) falls within the range of preferably from -30°C to 85°C, more preferably from -10°C to 80°C, particularly preferably from 10°C to 75°C from the viewpoints of the hardness and finished appearance of the coating film to be formed, and the like.

In this description, the glass transition temperature (°C) of the acrylic resin was calculated from the following equations.

$$1/Tg \ (K) = (W1/T1) + (W2/T2) + \cdots \cdots \quad (1)$$

$$Tg \ (°C) = Tg \ (K) - 273 \quad (2)$$

In the respective equations, W1, W2, ·· represent the respective mass fractions of monomers used in copolymerization, and T1, T2, ·· represent the Tgs (K) of the homopolymers of the respective monomers.

T1, T2, ·· are values according to "Polymer Handbook (Second Edition, edited by J. Brandup and E.H. Immergut)," III, pp. 139 to 179. In addition, when the Tgs of the homopolymers of the monomers were not clear, a static glass transition temperature was adopted as the glass transition temperature (°C). For example, the sample was loaded into the measuring cup of a differential scanning calorimeter "DSC-220U" (manufactured by Seiko Instruments Inc.), and was subjected to vacuum suction so that its solvent was completely removed, followed by the measurement of a change in heat quantity with the calorimeter at a rate of temperature increase of 3°C/min in the range of from -20°C to +200°C. The first baseline changing point at lower temperatures was adopted as the static glass transition temperature.

A copolymerization method for obtaining the hydroxy group-containing acrylic resin (A1) through the copolymerization of the mixture of the monomers described above is not particularly limited, and copolymerization methods known per se may each be used. Especially, a solution polymerization method including performing polymerization in an organic solvent in the presence of a polymerization initiator may be suitably used.

Examples of the organic solvent to be used in the solution polymerization method may include: aromatic solvents, such as toluene, xylene, and SWASOL 1000 (manufactured by Maruzen Petrochemical Co., Ltd., product name, high-boiling-point petroleum-based solvent); ester-based solvents, such as ethyl acetate, butyl acetate, propyl propionate, butyl propionate, 1-methoxy-2-propyl acetate, 2-ethoxyethyl propionate, 3-methoxybutyl acetate, ethylene glycol ethyl ether acetate, and propylene glycol methyl ether acetate; ketone-based solvents, such as methyl ethyl ketone, methyl isobutyl ketone, and methyl amyl ketone; and alcohol-based solvents, such as isopropanol, n-butanol, isobutanol, and 2-ethylhexanol.

Although those organic solvents may be used alone or in combination thereof, an ester-based solvent or a ketone-based solvent is preferably used in terms of the solubility of the acrylic resin. In addition, further, an aromatic solvent may be suitably used in combination therewith.

Examples of the polymerization initiator that may be used in the copolymerization of the hydroxy group-containing acrylic resin (A1) may include known radical polymerization initiators, such as 2,2'-azobisisobutyronitrile, benzoyl peroxide, di-t-butyl peroxide, di-t-amyl peroxide, t-butyl peroctoate, 2,2'-azobis(2-methylbutyronitrile), and 2,2'-azobis(2,4-dimethylvaleronitrile).

The hydroxy group-containing acrylic resins (A1) may be used alone or in combination thereof.

The above-mentioned hydroxy group-containing acrylic resin (A1) preferably contains a primary hydroxy group-containing acrylic resin (A11) from the viewpoint of low-temperature and short-time curability, and the like.

The above-mentioned primary hydroxy group-containing acrylic resin (A11) may be produced by, for example, using a primary hydroxy group-containing polymerizable unsaturated monomer as one kind of the hydroxy group-containing polymerizable unsaturated monomer in the method of producing the hydroxy group-containing acrylic resin (A1) described above.

Examples of the above-mentioned primary hydroxy group-containing polymerizable unsaturated monomer include: a polymerizable unsaturated monomer having a primary hydroxy group in which the alkyl group of an ester moiety has 2 to 8, preferably 2 to 6, more preferably 2 to 4 carbon atoms, such as 2-hydroxyethyl (meth)acrylate, 3-hydroxypropyl (meth)acrylate, or 4-hydroxybutyl (meth)acrylate; and an adduct of (meth)acrylic acid and an epoxy group-containing compound (e.g., "CARDURA E10P" (product name), manufactured by Hexion, Inc., glycidyl neodecanoate). Those monomers may be used alone or in combination thereof. Especially, 2-hydroxyethyl (meth)acrylate may be suitably used from the viewpoint of the hardness of the coating film to be formed, and the like.

From the viewpoint of the low-temperature and short-time curability of the coating film to be formed, and the like, the usage amount of the above-mentioned primary hydroxy group-containing polymerizable unsaturated monomer in the production of the above-mentioned primary hydroxy group-containing acrylic resin (A11) preferably falls within the range of from 10 mass% to 60 mass% with respect to the total amount of the monomer components to be copolymerized, and more preferably falls within the range of from 5 mass% to 50 mass% with respect thereto.

In addition, in the above-mentioned primary hydroxy group-containing acrylic resin (A11), the content of the above-mentioned primary hydroxy group-containing polymerizable unsaturated monomer in the total amount of the hydroxy group-containing polymerizable unsaturated monomer preferably falls within the range of from 50 mass% to 100 mass%, more preferably falls within the range of from 55 mass% to 100 mass%, and still more preferably falls within the range of from 60 mass% to 100 mass% from the viewpoint of low-temperature and short-time curability, and the like.

The content of the above-mentioned hydroxy group-containing acrylic resin (A1) in the coating composition of the present invention is preferably from 40 mass% to 85 mass%, more preferably from 45 mass% to 75 mass%, still more preferably from 50 mass% to 70 mass% with respect to the amount of the resin solid content of the coating composition from the viewpoints of the pot life, and low-temperature and short-time curability of the coating composition, and the like.


Polyisocyanate Compound (B)

The polyisocyanate compound (B) is a compound having at least two isocyanate groups in a molecule thereof, and examples thereof may include an aliphatic polyisocyanate compound, an alicyclic polyisocyanate compound, an aromatic-aliphatic polyisocyanate compound, an aromatic polyisocyanate compound, and the derivatives of the polyisocyanate compounds.

Examples of the aliphatic polyisocyanate compound may include: aliphatic diisocyanate compounds, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (trivial name: lysine diisocyanate); and aliphatic triisocyanate compounds, such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of the alicyclic polyisocyanate compound may include: alicyclic diisocyanate compounds, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (trivial name: isophorone diisocyanate), 4-methyl-1,3-cyclohexylene diisocyanate (trivial name: hydrogenated TDI), 2-methyl-1,3-cyclohexylene diisocyanate, 1,3- or 1,4-bis(isocyanatomethyl)cyclohexane (trivial name: hydrogenated xylylene diisocyanate) or mixtures thereof, methylenebis(4,1-cyclohexanediyl) diisocyanate (trivial name: hydrogenated MDI), and norbornane diisocyanate; and alicyclic triisocyanate compounds, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, and 6-(2-isocyanatoethyl)-2-isocyanatomethyl-2-(3-isocyanatopropyl)-bicyclo(2.2.1)heptane.

Examples of the aromatic-aliphatic polyisocyanate compound may include: aromatic-aliphatic diisocyanate compounds, such as methylenebis(4,1-phenylene) diisocyanate (trivial name: MDI), 1,3- or 1,4-xylylene diisocyanate or mixtures thereof, $\omega,\omega'$-diisocyanato-1,4-diethylbenzene, and 1,3- or 1,4-bis(1-isocyanato-1-methylethyl)benzene (trivial name: tetramethylxylylene diisocyanate) or mixtures thereof; and aromatic-aliphatic triisocyanate compounds such as 1,3,5-triisocyanatomethylbenzene.

Examples of the aromatic polyisocyanate compound may include: aromatic diisocyanate compounds, such as m-phenylene diisocyanate, p-phenylene diisocyanate, 4,4'-diphenyl diisocyanate, 1,5-naphthalene diisocyanate, 2,4-tolylene diisocyanate (trivial name: 2,4-TDI) or 2,6-tolylene diisocyanate (trivial name: 2,6-TDI) or mixtures thereof, 4,4'-toluidine diisocyanate, and 4,4'-diphenyl ether diisocyanate; aromatic triisocyanate compounds, such as triphenylmethane-4,4',4"-triisocyanate, 1,3,5-triisocyanatobenzene, and 2,4,6-triisocyanatotoluene; and aromatic tetraisocyanate compounds such as 4,4'-diphenylmethane-2,2',5,5'-tetraisocyanate.

In addition, examples of the derivative of the polyisocyanate compound may include dimers, trimers, biurets, allophanates, uretdiones, uretimines, isocyanurates, oxadiazinetriones, polymethylene polyphenyl polyisocyanates (crude MDIs and polymeric MDIs), and crude TDIs of the polyisocyanate compounds described above.

The polyisocyanate compounds and the derivatives thereof described above may be used alone or in combination thereof.

At least one kind selected from the aliphatic polyisocyanate compound, the alicyclic polyisocyanate compound, and the derivatives thereof is preferably used as the polyisocyanate compound (B) from the viewpoint of the weatherability of the coating film to be formed, and the like, and the aliphatic polyisocyanate compound and/or a derivative thereof is more preferably used from the viewpoint of the finished appearance of the coating film to be formed from the coating composition to be obtained, and the like.

Especially, from the viewpoints of, for example, the finished appearance, curability, and weatherability of the coating film to be formed, an aliphatic diisocyanate compound and/or an isocyanurate form thereof out of those described above is preferably used as the aliphatic polyisocyanate compound and/or the derivative thereof described above, and hexamethylene diisocyanate and/or an isocyanurate form thereof is more preferably used.

The content of the polyisocyanate compound (B) in the coating composition of the present invention is preferably from 5 mass% to 60 mass%, more preferably from 10 mass% to 55 mass%, still more preferably from 15 mass% to 50 mass% with respect to the amount of the resin solid content of the coating composition from the viewpoints of, for example, the pot life, and low-temperature and short-time curability of the coating composition.

Organometallic Catalyst (C) formed of Zinc Compound and Amidine Compound

The organometallic catalyst (C) formed of the zinc compound and the amidine compound has both of a function as a catalyst that accelerates the curing reaction of this coating at the time of its heating and a function as a blocking agent for a catalytic ability at the time of normal temperature.

This is probably because of the following reason. The organometallic catalyst (C) formed of the zinc compound and the amidine compound forms a complex structure, and the amidine compound serves as a blocking agent. The amidine compound serving as the blocking agent dissociates at low temperature, and after the dissociation of the amidine compound, a catalytic ability intrinsic to the zinc compound, the ability excelling in improving low-temperature curability, becomes active. Accordingly, both of the low-temperature and short-time curability, and pot life of this coating can be achieved.

Examples of the above-mentioned zinc compound may include a zinc carboxylate compound and a zinc acetylacetonate complex. In particular, a zinc carboxylate compound may be suitably used.

Specific examples of the above-mentioned zinc carboxylate compound may include zinc 2-ethylhexanoate, zinc acetate, zinc naphthenate, zinc octylate, zinc stearate, zinc neodecanoate, and zinc oleate. Especially, zinc octylate may be suitably used because zinc octylate is excellent in catalytic activity and is industrially available with ease.

The amidine compound is an organic compound having a structure represented by the following formula (1).

$$R^1\text{-}C(=NR^2)\text{-}NR^3R^4 \cdots \qquad (1)$$

In the formula (1), one nitrogen atom is bonded to a carbon (C) atom through a double bond, and another nitrogen atom is bonded thereto through a single bond.

$R^1$ represents a hydrogen atom, an organic group that may be substituted, or an amine group, and may specifically represent, for example, a hydrocarbyl group that may be substituted or a hydroxy group that may be etherified.

$R^2$ and $R^3$ each independently represent a hydrogen atom or an organic group, or represent heterocycles having such a structure that the heterocycles are bonded to each other (the heterocycles are each a monocycle having one or two or more heteroatoms, or are a bonded double ring having one or two or more heteroatoms).

$R^4$ represents a hydrogen atom, an organic group that may be substituted, or a hydroxy group that may be etherified, and may preferably represent, for example, a hydrocarbyl group having 8 or more carbon atoms that may be substituted.

When $R^1$ or $R^4$ represents an organic group, the group may be, for example, a group having 1 to 40 carbon atoms, or for example, a polymer group having a molecular weight of from 500 to 50,000.

The groups represented by $R^1$, $R^2$, $R^3$, and $R^4$ may each independently contain an alcoholic hydroxy group as a substituent.

Specific examples of the amidine compound represented by the formula (1) in which $R^2$ and $R^3$ are not bonded to each other may include N'-cyclohexyl-N,N-dimethylformamidine, N'-methyl-N,N-di-n-butylacetamidine, N'-octadecyl-N,N-dimethylformamidine, N'-cyclohexyl-N,N-dimethylvaleroamidine, 1-methyl-2-cyclohexyliminopyrrolidine, 3-butyl-3,4,5,6-tetrahydropyrimidine, N-(hexyliminomethyl)morpholine, N-(α-(decyliminoethyl)ethyl)pyrrolidine, N'-decyl-N,N-dimethylformamidine, N'-dodecyl-N,N-dimethylformamidine, and N'-cyclohexyl-N,N-acetamidine.

In addition, the following amidine compound is included in the amidine compound: an amidine compound having such a structure that $R^2$-$R^3$ form a five- to seven-membered ring containing two nitrogen atoms in its amidine structure, and one of $R^1$-$R^3$ or $R^1$-$R^4$ forms a five- to nine-membered ring with one nitrogen atom and a plurality of carbon atoms in the amidine structure.

Specific examples of the amidine compound having such structure may include 1,5-diazabicyclo(4.3.0)non-5-ene, 1,8-diazabicyclo(5.4.0)undec-7-ene, 1,4-diazabicyclo(3.3.0)oct-4-ene, 2-methyl-1,5-diazabicyclo(4.3.0)non-5-ene, 2,7,8-trimethyl-1,5-diazabicyclo(4.3.0)non-5-ene, 2-butyl-1,5-diazabicyclo(4.3.0)non-5-ene, and 1,9-diazabicyclo(6.5.0)tridec-8-ene.

In addition, examples of the amidine compound may include heterocyclic compounds each having such a structure that $R^2$ and $R^3$ in the formula (1) are bonded to each other, such as imidazole, imidazoline, tetrahydropyrimidine, dihydropyrimidine, and pyrimidine ring-containing compounds.

Specific examples of the imidazole compound may include N-(2-hydroxyethyl)imidazole, N-(3-aminopropyl)imidazole, 4-(hydroxymethyl)imidazole, 1-(tert-butoxycarbonyl)imidazole, imidazole-4-propionic acid, 4-carboxyimidazole, 1-butylimidazole, 1-methylimidazole, 2-methyl-4-imidazolecarboxylic acid, 4-formylimidazole, 1-(ethoxycarbonyl)imidazole, a reaction product of propylene oxide and imidazole and 2-methylimidazole, 1-trimethylsilylimidazole, 4-(hydroxymethyl)imidazole hydrochloride, a copolymer of 1-chloro-2,3-epoxypropane and imidazole, 1-(p-toluenesulfonyl)imidazole, 1,1-carbonylbisimidazole, 1-(2-cyanoethyl)-2-ethyl-4-methylimidazole, 2-phenyl-2-imidazoline pyromellitate, 4-(hydroxymethyl)imidazole picrate, a disodium salt of 2-propenoic acid, 4,5-dihydro-2-nonyl-1H-imidazole-1-ethanol, and 2-heptyl-4,5-dihydro-1H-imidazole-1-ethanol, 1-(cyanoethyl)-2-undecylimidazole trimellitate, 1-(2-hydroxypropyl)imidazole formate, sodium imidazolate, and silver imidazolate.

The amidine compounds may be used alone or in combination thereof.

Specifically, in this coating, the organometallic catalyst formed of the zinc compound and the amidine compound is a metal complex, and the complex may be produced by, for example, heating one mole of a zinc carboxylate and two moles of the amidine compound in a solvent such as methanol.

In the above-mentioned production, the metal complex may be produced by holding the mixture at about 50°C for about 2 hours until the mixture is brought into a transparent solution state. The transparent solution is filtered and dried. The molar ratio (ratio of the number of moles of the amidine compound to the number of moles of the zinc compound) of the amidine compound to the zinc compound is preferably set within the range of from 1.3 to 8.0, more preferably set within the range of from 1.6 to 5.0, and still more preferably set within the range of from 1.8 to 4.0 from the viewpoints of the pot life, and low-temperature and short-time curability of the coating composition, and the like.

The organometallic catalyst formed of the zinc compound and the amidine compound may be used by being dissolved in a solvent. The solvent is not particularly limited, but examples thereof may include solvents including: alcohol compounds, such as ethylene glycol, diethylene glycol, dipropylene glycol, propylene glycol, and butanediol; hydrocarbon compounds, such as toluene, xylene, mineral turpentine, and mineral spirit; ester compounds, such as ethyl acetate, butyl acetate, methyl glycol acetate, and cellosolve acetate; ketone compounds, such as methyl ethyl ketone, methyl isobutyl ketone, and cyclohexanone; glycol ether compounds, such as ethyl 3-ethoxypropionate and 3-methoxybutyl acetate; organic solvents of amide compounds, such as N,N-dimethylformamide and N,N-dimethylacetamide; β-diketone compounds, such as acetylacetone and fluorine-substituted products thereof; and ketoester compounds, such as methyl acetoacetate and ethyl acetoacetate.

The content of the organometallic catalyst (C) formed of the zinc compound and the amidine compound preferably falls within the range of from 0.01 part by mass to 5 parts by mass, more preferably falls within the range of from 0.03 part by mass to 4 parts by mass, and still more preferably falls within the range of from 0.05 part by mass to 3 parts by mass with respect to 100 parts by mass of the resin solid content of the coating composition of the present invention from the viewpoints of the pot life, and low-temperature and short-time curability of the coating composition, and the like.

Phosphate Group-containing Compound (D)

The phosphate group-containing compound (D) has a function of suppressing the catalytic ability of the organometallic catalyst (C) formed of the zinc compound and the amidine compound at the time of normal temperature.

Examples of the phosphate group-containing compound (D) may include: phosphoric acid; monoalkyl phosphoric acids, such as mono-n-propyl phosphoric acid, monoisopropyl phosphoric acid, mono-n-butyl phosphoric acid, monoisobutyl phosphoric acid, mono-tert-butyl phosphoric acid, monooctyl phosphoric acid, and monodecyl phosphoric acid; dialkyl phosphoric acids, such as din-propyl phosphoric acid, diisopropyl phosphoric acid, di-n-butyl phosphoric acid, diisobutyl phosphoric acid, di-tert-butyl phosphoric acid, dioctyl phosphoric acid, and didecyl phosphoric acid; monoalkyl phosphorus acids, such as mono-n-propyl phosphorus acid, monoisopropyl phosphorus acid, mono-n-butyl phosphorus acid, monoisobutyl phosphorus acid, mono-tert-butyl phosphorus acid, monooctyl phosphorus acid, and monodecyl phosphorus acid; dialkyl phosphorus acids, such as di-n-propyl phosphorus acid, diisopropyl phosphorus acid, di-n-butyl phosphorus acid, diisobutyl phosphorus acid, di-tert-butyl phosphorus acid, dioctyl phosphorus acid, and didecyl phosphorus acid; alkyl ether phosphoric acids; polyoxyethylene alkyl ether phosphoric acids; alkyl phosphates (D1); and phosphate group-containing resins (D2). Especially, an alkyl phosphate (D1) and/or a phosphate group-containing resin (D2) is preferably incorporated, and an alkyl phosphate (D1) is more preferably incorporated. Those compounds may be used alone or in combination thereof.

In the present invention, a resin containing a phosphate group and a hydroxy group is included not in the hydroxy group-containing resin (A) but in the phosphate group-containing compound (D).

The alkyl phosphate (D1) may be, for example, a compound having a chemical structure represented by the following formula (2).

$$O=P(OR)_n(OH)_{3-n}\cdots \qquad \text{Formula (2)}$$

In the formula, R represents an alkyl group having 4 or more, preferably 6 to 20 carbon atoms. The alkyl group, which may be linear or branched, is preferably branched. In addition, "n" represents an integer of 1 or more and 3 or less. In addition, "n" Rs may be identical to or different from each other.

A commercial product that may be used as the above-mentioned alkyl phosphate (D1) is, for example, NACURE 4054J (product name, manufactured by King Industries, Inc.), Korantin SMK (product name, manufactured by BASF SE), NIKKOL PHOSTEN HLP (product name, manufactured by Nikko Chemicals Co., Ltd.), PHOSPHANOL RS-410, PHOSPHANOL RS-610, PHOSPHANOL RS-710, PHOSPHANOL RD-510Y, PHOSPHANOL RD-720, PHOSPHANOL RB-410, PHOSPHANOL RL-210, PHOSPHANOL RL-310, PHOSPHANOL ML-200, PHOSPHANOL ML-220, PHOSPHANOL RE-410, PHOSPHANOL PE-510, PHOSPHANOL RE-610, PHOSPHANOL RE-960, PHOSPHANOL RM-410, PHOSPHANOL RM-510, PHOSPHANOL RM-710, PHOSPHANOL RE-210, PHOSPHANOL RP-710, or PHOSPHANOL SM-172 (all of which are product names, manufactured by TOHO Chemical Industry Co., Ltd.), or PLYSURF A212C, PLYSURF A215C, PLYSURF A208B, PLYSURF A219B, PLYSURF A210G, PLYSURF A208F, or PLYSURF A212E (all of which are product names, manufactured by DKS Co. Ltd.). Each of those products may be used as it is, or as a salt neutralized with an alkali metal or an organic base. In addition, two or more kinds thereof may be used in combination.

When the coating composition of the present invention includes the above-mentioned alkyl phosphate (D1) as the phosphate group-containing compound (D), its content preferably falls within the range of from 0.01 part by mass to 3 parts by mass, more preferably falls within the range of from 0.05 part by mass to 2.5 parts by mass, and still more preferably falls within the range of from 0.1 part by mass to 2 parts by mass with respect to 100 parts by mass of the resin solid content of the coating composition of the present invention from the viewpoints of the pot life, and low-temperature and short-time curability of the coating composition, and the like.

Examples of the above-mentioned phosphate group-containing resin (D2) may include a phosphate group-containing acrylic resin (D21), a phosphate group-containing polyester resin, a phosphate group-containing polyether resin, a phosphate group-containing polycarbonate resin, a phosphate group-containing polyurethane resin, and a phosphate group-containing epoxy resin. Especially, a phosphate group-containing acrylic resin (D21) is preferred from the viewpoints of the pot life, and low-temperature and short-time curability of the coating composition, and the like.

The phosphate group-containing acrylic resin (D21) may be synthesized through the copolymerization of a polymerizable unsaturated monomer having a phosphate group and any other polymerizable unsaturated monomer by an ordinary method.

Examples of the above-mentioned polymerizable unsaturated monomer having a phosphate group may include acid phosphooxyethyl (meth)acrylate, acid phosphooxypropyl (meth)acrylate, acid phosphooxypoly(oxyethylene) glycol (meth)acrylate, and acid phosphooxypoly(oxypropylene) glycol (meth)acrylate.

Examples of the other polymerizable unsaturated monomer may include the compounds listed in the section "Hydroxy Group-containing Acrylic Resin (A1)."

In the phosphate group-containing acrylic resin (D21), the polymerizable unsaturated monomer having a phosphate group accounts for preferably from 1 mass% to 50 mass%, particularly preferably from 5 mass% to 40 mass% of the total amount of the respective monomer components for forming the phosphate group-containing acrylic resin (D21).

The weight-average molecular weight of the phosphate group-containing acrylic resin (D21) falls within the range of preferably from 3,000 to 30,000, more preferably from 5,000 to 25,000, particularly preferably from 7,000 to 20,000 from the viewpoints of finished appearance and coating film performance.

When the coating composition of the present invention includes the above-mentioned phosphate group-containing acrylic resin (D21) as the phosphate group-containing compound (D), its content is preferably from 0.01 mass% to 3 mass%, more preferably from 0.05 mass% to 2.5 mass%, still more preferably from 0.1 mass% to 2 mass% with respect to the amount of the resin solid content of the coating composition from the viewpoints of the pot life, and low-temperature and short-time curability of the coating composition, and the like.

When the coating composition of the present invention includes a phosphate group-containing compound except the above-mentioned alkyl phosphate (D1) and the above-mentioned phosphate group-containing acrylic resin (D21) as the phosphate group-containing compound (D), its content preferably falls within the range of from 0.01 part by mass to 3 parts by mass, more preferably falls within the range of from 0.05 part by mass to 2.5 parts by mass, and still more preferably falls within the range of from 0.1 part by mass to 2 parts by mass with respect to 100 parts by mass of the resin solid content of the coating composition of the present invention from the viewpoints of the pot life, and low-temperature and short-time curability of the coating composition, and the like.

The content ratio of the organometallic catalyst (C) formed of the zinc compound and the amidine compound to the phosphate group-containing compound (D) in the coating composition of the present invention preferably falls within the range of from 1/0.1 to 1/10, more preferably falls within the range of from 1/0.3 to 1/8, and still more preferably falls within the range of from 1/0.5 to 1/5 in terms of molar ratio of the organometallic catalyst (C) formed of the zinc compound and the amidine compound to the phosphate group-containing compound (D) from the viewpoints of the pot life, and low-temperature and short-time curability of the coating composition, and the like.

Other Component

The coating composition of the present invention may further optionally include, for example, a resin except the hydroxy group-containing resin (A), a crosslinking agent except the polyisocyanate compound (B), a curing catalyst except the organometallic catalyst (C) formed of the zinc compound and the amidine compound, a pigment, a matting agent, an organic solvent, a dispersant, an anti-settling agent, an antifoaming agent, a thickener, a UV absorber, a light stabilizer, a surface-adjusting agent, or a scratch resistance improver.

Examples of the resin except the hydroxy group-containing resin (A) described above may include a hydroxy group-free acrylic resin, a hydroxy group-free polyester resin, a hydroxy group-free polyurethane resin, a hydroxy group-free polyether resin, a hydroxy group-free polycarbonate resin, and a hydroxy group-free epoxy resin.

Examples of the pigment may include a coloring pigment, a luster pigment, and an extender pigment. The pigments may be used alone or in combination thereof.

Examples of the coloring pigment may include titanium oxide, zinc flower, carbon black, cadmium red, molybdenum red, chrome yellow, chromium oxide, prussian blue, cobalt blue, an azo pigment, a phthalocyanine pigment, a quinacridone pigment, an isoindoline pigment, a threne-based pigment, and a perylene pigment.

Examples of the luster pigment may include aluminum powder, mica powder, and mica powder coated with titanium oxide.

Examples of the extender pigment may include talc, clay, kaolin, baryta, barium sulfate, barium carbonate, calcium carbonate, and alumina white.

The respective pigments described above may be used alone or in combination thereof.

When the coating composition of the present invention is used as a clear coating, and includes the pigment, the blending amount of the pigment is preferably such an amount that the transparency of the coating film to be obtained is not impaired. For example, the blending amount preferably falls within the range of from 0.1 mass% to 20 mass%, more preferably falls within the range of from 0.3 mass% to 10 mass%, and particularly preferably falls within the range of from 0.5 mass% to 5 mass% with respect to the total amount of the resin solid content in the coating composition.

In addition, when the coating composition of the present invention is used as a colored coating, and includes the pigment, the blending amount of the pigment preferably falls within the range of from 1 mass% to 200 mass%, more preferably falls within the range of from 2 mass% to 100 mass%, and particularly preferably falls within the range of from 5 mass% to 50 mass% with respect to the total amount of the resin solid content in the coating composition.

Examples of the matting agent include silica particles, alumina particles, titania particles, zirconia particles, zircon particles, tin oxide particles, magnesia particles, polymethyl methacrylate (PMMA) resin beads, MMA-ethylene glycol dimethacrylate (EGDM) copolymerized resin beads, nylon resin beads, and polytetrafluoroethylene resin beads.

When the coating composition of the present invention is used as a matte coating, and includes the matting agent, for example, the blending amount of the matting agent preferably falls within the range of from 1 mass% to 30 mass%, more preferably falls within the range of from 2 mass% to 25 mass%, and particularly preferably falls within the range of from 3 mass% to 20 mass% with respect to the total amount of the resin solid content in the coating composition.

Examples of the organic solvent may include: aromatic solvents, such as toluene, xylene, and "SWASOL 1000" (manufactured by Maruzen Petrochemical Co., Ltd., product name, aromatic organic solvent); ester-based solvents, such as ethyl acetate, butyl acetate, propyl propionate, butyl propionate, 1-methoxy-2-propyl acetate, 2-ethoxyethyl propionate, ethyl 3-ethoxypropionate, 3-methoxybutyl acetate, ethylene glycol monoethyl ether acetate, diethylene glycol monoethyl ether acetate, and propylene glycol monomethyl ether acetate; ketone-based solvents, such as methyl ethyl ketone, methyl isobutyl ketone, and methyl amyl ketone; and alcohol-based solvents, such as isopropanol, n-butanol, isobutanol, and 2-ethylhexanol. Those solvents may be used alone or in combination thereof.

A thickener that has heretofore been known may be used as the thickener, and examples thereof may include a clay mineral (e.g., a metal silicate or montmorillonite), an acryl (e.g., an acryl containing a structure formed of a polymer or oligomer of an acrylic acid ester or a methacrylic acid ester in a molecule thereof, or a non-aqueous dispersion resin), a polyolefin (e.g., polyethylene or polypropylene), an amide (e.g., a higher fatty acid amide, a polyamide, or an oligomer), a polycarboxylic acid (including a derivative having at least two or more carboxyl groups in a molecule thereof), a cellulose (including various derivatives, such as nitrocellulose, acetyl cellulose, and a cellulose ether), a urethane (e.g., a polymer or oligomer having a urethane structure in a molecule thereof), a urea (e.g., a polymer or oligomer having a urea structure in a molecule thereof), and a urethane urea (e.g., a polymer or oligomer having a urethane structure and a urea structure in a molecule).

A UV absorber that has heretofore been known may be used as the UV absorber, and examples thereof may include UV absorbers, such as a benzotriazole-based absorber, a triazine-based absorber, a salicylic acid derivative-based absorber, and a benzophenone-based absorber. Those absorbers may be used alone or in combination thereof.

When the coating composition of the present invention includes the UV absorber, the blending amount of the UV absorber preferably falls within the range of from 0.1 mass% to 10 mass%, more preferably falls within the range of from 0.2 mass% to 8 mass%, and particularly preferably falls within the range of from 0.3 mass% to 6 mass% with respect to the total amount of the solid content in the coating composition.

A light stabilizer that has heretofore been known may be used as the light stabilizer, and may be, for example, a hindered amine-based light stabilizer.

A hindered amine-based light stabilizer having low basicity may be suitably used as the hindered amine-based light stabilizer from the viewpoint of a pot life. Examples of such hindered amine-based light stabilizer may include an acylated hindered amine and an aminoether-based hindered amine, and specific examples thereof may include "HOSTAVIN 3058" (product name, manufactured by Clariant AG), "TINUVIN 123" (product name, manufactured by BASF SE), and "HALS 292" (product name, manufactured by BASF SE).

A coating method for the coating composition of the present invention is not particularly limited, and examples thereof include coating methods, such as air spray coating, airless spray coating, rotary atomization coating, and curtain coat coating. Those methods each enable the formation of a wet coating film. In each of those coating methods, electrostatic application may be optionally performed. Of those, air spray coating or rotary atomization coating is particularly preferred. The application amount of this coating is preferably set to such an amount that the cured thickness thereof becomes from 5 $\mu$m to 50 um, and the amount is particularly preferably set to such an amount that the cured thickness becomes from 10 um to 40 pm.

In addition, when each of the air spray coating, the airless spray coating, and the rotary atomization coating is performed, it is preferred that the viscosity of this coating be appropriately adjusted with a solvent such as an organic solvent and a thickener within a viscosity range suitable for the coating, the viscosity range being typically from 5 seconds to 20 seconds, in particular, from 8 seconds to 15 seconds at 20°C in ANEST IWATA Viscosity Cup NK2.

Coating Film Forming Method

The coating composition of the present invention may be suitably used in a coating film forming method including: coating the top of a material to be coated with the coating composition of the present invention to form a coating film; and then heating the coating film to cure the coating film.

The coating composition of the present invention may be used in various industrial applications. The composition may be suitably used as a coating composition for an automobile outer plate or part, and may be particularly suitably used as a clear coat coating composition.

Preferred aspects of the above-mentioned coating film forming method may include the following methods (A) to (D).

Method (A)

A coating film forming method including:

step (A1): a step of coating the top of the material to be coated with the coating composition of the present invention to form a clear coat coating film; and
step (A2): a step of heating the clear coat coating film formed in the step (A1) to cure the coating film.

Method (B)

A coating film forming method including:

step (B1): a step of coating the top of the material to be coated with a base coat coating composition to form a base coat coating film;
step (B2): a step of coating the top of the base coat coating film with the coating composition of the present invention to form a clear coat coating film; and

step (B3): a step of heating the base coat coating film formed in the step (B1) and the clear coat coating film formed in the step (B2) separately or simultaneously to cure the coating films.

Method (C)

A coating film forming method including:

step (C1): a step of coating the top of the material to be coated with a first base coat coating composition to form a first base coat coating film;

step (C2): a step of coating the top of the first base coat coating film with a second base coat coating composition to form a second base coat coating film;

step (C3): a step of coating the top of the second base coat coating film with the coating composition of the present invention to form a clear coat coating film; and

step (C4): a step of heating the first base coat coating film formed in the step (C1), the second base coat coating film formed in the step (C2), and the clear coat coating film formed in the step (C3) separately or simultaneously to cure the coating films.

Method (D)

A coating film forming method including:

step (D1): a step of coating the top of the material to be coated with a primer coating composition to form a primer coating film;

step (D2): a step of coating the top of the primer coating film with a first base coat coating composition to form a first base coat coating film;

step (D3): a step of coating the top of the first base coat coating film with a second base coat coating composition to form a second base coat coating film;

step (D4): a step of coating the top of the second base coat coating film with the coating composition of the present invention to form a clear coat coating film; and

step (D5): a step of heating the primer coating film formed in the step (D1), the first base coat coating film formed in the step (D2), the second base coat coating film formed in the step (D3), and the clear coat coating film formed in the step (D4) separately or simultaneously to cure the coating films.

The above-mentioned material to be coated is not particularly limited, and examples thereof may include: the outer plate portion of an automobile body for a passenger car, a truck, a motorcycle, a bus, or the like; an automobile part; and the outer plate portion of a home appliance, such as a cellular phone or an audio instrument. Of those, the outer plate portion of an automobile body and an automobile part are preferred.

A material for such material to be coated is not particularly limited. Examples thereof may include: metal materials, such as iron, aluminum, brass, copper, tinned iron, stainless steel, zinc-plated steel, and steel plated with a zinc alloy (e.g., Zn-Al, Zn-Ni, or Zn-Fe); resins, such as a polyethylene resin, a polypropylene resin, an acrylonitrile-butadiene-styrene (ABS) resin, a polyamide resin, an acrylic resin, a vinylidene chloride resin, a polycarbonate resin, a polyurethane resin, and an epoxy resin; plastic materials such as various FRPs; inorganic materials, such as glass, cement, and concrete; wood; and fiber materials, such as paper and cloth. Of those, metal materials and plastic materials are preferred.

In addition, the surface of the material to be coated to which the coating film is applied may be a surface obtained by subjecting the metal surface of, for example, a metal substrate such as a steel plate for forming each of the outer plate portion and inner plate portion of an automobile body, an automobile part, and a home appliance to surface treatment, such as phosphate treatment, chromate treatment, or composite oxide treatment.

A coating film may be further formed on an object that may be or may not be subjected to surface treatment. For example, the following may be performed: the material to be coated serving as a substrate is optionally subjected to the surface treatment, and an undercoat coating film is formed thereon. For example, when the material to be coated is an automobile body, the above-mentioned undercoat coating film may be formed by using a coating for undercoating known per se that has been typically used in the coating of the automobile body.

For example, an electrodeposition coating, preferably a cationic electrodeposition coating may be used as the undercoat coating for forming the undercoat coating film.

A product obtained by turning the following materials into a coating together with a pigment, a thickener, and any other optional component may be used as the above-mentioned primer coating composition: a base resin, such as a polyolefin resin, an acrylic resin having a crosslinkable functional group, such as a carboxyl group or a hydroxy group, a polyester resin, an alkyd resin, a urethane resin, and an epoxy resin; and a crosslinking agent, such as an amino resin, such as a melamine resin or a urea resin, or a polyisocyanate compound that may be blocked.

A product obtained by turning the following materials into a coating together with a pigment, a thickener, and any other optional component may be used as each of the above-mentioned first base coat coating composition and second base coat coating composition: a base resin, such as an acrylic resin, a polyester resin, an alkyd resin, a urethane resin, or an epoxy resin having a crosslinkable functional group, such as a carboxyl group or a hydroxy group; and a crosslinking agent, such as an amino resin, such as a melamine resin or a urea resin, or a polyisocyanate compound that may be blocked.

The heating may be performed by known means, and a drying furnace, such as a hot-air furnace, an electric furnace, or an infrared-induced heating furnace, may be applied. A heating temperature falls within the range of from 50°C to 110°C, preferably from 60°C to 90°C. Although a heating time is not particularly limited, the time falls within the range of preferably from 5 minutes to 40 minutes, more preferably from 10 minutes to 35 minutes.

Examples

The present invention is more specifically described below by way of Examples and Comparative Examples. However, the present invention is not limited to these examples. The terms "part(s)" and "%" mean "part(s) by mass" and "mass%", respectively.

Production of Hydroxy Group-containing Acrylic Resin (A1)

Production Example 1

27 Parts of "SWASOL 1000" (product name, manufactured by Maruzen Petrochemical Co., Ltd., aromatic organic solvent) and 5 parts of propylene glycol monomethyl ether acetate were loaded into a reaction vessel including a temperature gauge, a thermostat, a stirring device, a reflux condenser, a nitrogen-introducing tube, and a dropping device. While a nitrogen gas was blown into the reaction vessel, the loaded liquid was stirred at 150°C, and a monomer mixture formed of 20 parts of styrene, 24.8 parts of isobutyl methacrylate, 24 parts of ethyl acrylate, 30 parts of 2-hydroxyethyl methacrylate, 1.2 parts of acrylic acid, and 4.5 parts of ditertiary amyl peroxide (polymerization initiator) was dropped thereinto over 4 hours at a constant rate. After that, the mixture was aged at 150°C for 1 hour, and was then cooled. Further, 21 parts of isobutyl acetate was added to dilute the cooled product. Thus, a solution of a primary hydroxy group-containing acrylic resin (A11-1) having a solid content concentration of 65 mass% was obtained. The resultant primary hydroxy group-containing acrylic resin (A11-1) had an acid value of 9.3 mgKOH/g, a hydroxyl value of 129 mgKOH/g, a weight-average molecular weight of 6,000, and a glass transition temperature of 39°C.

Production of Organometallic Catalyst (C) formed of Zinc Compound and Amidine Compound

Production Example 2

47 Parts of ethyl 3-ethoxypropionate and 81.6 parts of "NIKKA OCTHIX ZINC" (product name, zinc octylate, manufactured by Nihon Kagaku Sangyo Co., Ltd., zinc content: 8 mass%) were loaded into a reaction vessel including a stirrer, a condenser, a temperature controller, a nitrogen-introducing tube, and a dropping funnel. The inside of the reaction vessel was purged with nitrogen and heated to 50°C. Next, 16.4 parts of 1-methylimidazole was dropped into the mixture under stirring, and after the completion of the dropping, a temperature of 50°C was held for 2 hours to complete the reaction. The resultant organometallic catalyst (C-1) formed of the zinc compound and the amidine compound was a liquid whose zinc content was 4.5 mass%.

Production Examples 3 to 10

Organometallic catalysts (C-2) to (C-9) each formed of a zinc compound and an amidine compound were each obtained in the same manner as in Production Example 2 except that in Production Example 2, the blending composition was set to that shown in Table 1.

Table 1

| Production Example | | 2 | 3 | 4 | 5 | 6 | 7 | 8 | 9 | 10 |
|---|---|---|---|---|---|---|---|---|---|---|
| Name of organometallic catalyst (C) formed of zinc compound and amidine compound | | C-1 | C-2 | C-3 | C-4 | C-5 | C-6 | C-7 | C-8 | C-9 |
| Zinc compound | "NIKKA OCTHIX ZINC" | 81.6 | | | 81.6 | 81.6 | 81.6 | 81.6 | 81.6 | 81.6 |
| | "Zinc Naphthenate" (note 1) | | 64.7 | | | | | | | |
| | "Zinc Acetylacetonate" (note 2) | | | 26.2 | | | | | | |
| Amidine compound | 1-Methylimidazole | 16.4 | 16.4 | 16.4 | | | | | 32.8 | 14.8 |
| | 1-Butylimidazole | | | | 24.8 | | | | | |
| | DBN (note 3) | | | | | 24.8 | | | | |
| | DBU (note 4) | | | | | | 30.4 | | | |
| | Tetramethylguanidine | | | | | | | 23 | | |
| Ethyl 3-ethoxypropionate | | 47 | 64 | 102 | 39 | 39 | 33 | 41 | 31 | 49 |
| Molar ratio "(amidine compound)/(zinc compound) " | | 2 | 2 | 2 | 2 | 2 | 2 | 2 | 4 | 1.8 |
| Mass metal concentration (%) | | 4.5 | 4.5 | 4.5 | 4.5 | 4.5 | 4.5 | 4.5 | 4.5 | 4.5 |
| "Zinc Naphthenate" (note 1): zinc content: 10.1%, manufactured by Tokyo Chemical Industry Co., Ltd., <br> "Zinc Acetylacetonate" (note 2): zinc content: 25%, manufactured by Showa Chemical Co., Ltd., <br> DBN (note 3): 1,5-diazabicyclo[4.3.0]non-5-ene, and <br> DBU (note 4): 1,8-diazabicyclo[5.4.0]undecan-7-ene. | | | | | | | | | | |

Production of Other Organometallic Catalyst (E)

Production Example 11

364 Parts of ethyl 3-ethoxypropionate and 83.6 parts of "K-KAT 348" (product name, bismuth octylate, bismuth content: 25%, manufactured by King Industries, Inc.) were loaded into a reaction vessel including a stirrer, a condenser, a temperature controller, a nitrogen-introducing tube, and a dropping funnel. The inside of the reaction vessel was purged with nitrogen and heated to 50°C. Next, 16.4 parts of 1-methylimidazole was dropped into the mixture under stirring, and after the completion of the dropping, a temperature of 50°C was held for 2 hours to complete the reaction. The resultant other organometallic catalyst (E-1) was a liquid whose bismuth content was 4.5 mass%.

Production Examples 12 and 13

Other organometallic catalysts (E-2) and (E-3) were each obtained in the same manner as in Production Example 11 except that in Production Example 11, the blending composition was set to that shown in Table 2.

Table 2

| Production Example | | 11 | 12 | 13 |
|---|---|---|---|---|
| Name of other organometallic catalyst (E) | | E-1 | E-2 | E-3 |
| Metal compound | "K-KAT 348" | 83.6 | | |
| | "NIKKA OCTHIX COBALT" (note 5) | | 68.5 | |
| | "NIKKA OCTHIX MANGANESE" (note 6) | | | 69 |
| Amidine compound | 1-Methylimidazole | 16.4 | 16.4 | 16.4 |
| Ethyl 3-ethoxypropionate | | 364 | 46 | 36.6 |

(continued)

| Production Example | 11 | 12 | 13 |
|---|---|---|---|
| Molar ratio "(amidine compound)/(metal compound)" | 2 | 2 | 2 |
| Mass metal concentration (%) | 4.5 | 4.5 | 4.5 |

"NIKKA OCTHIX COBALT" (note 5): product name, cobalt octylate, cobalt content: 8%, manufactured by Nihon Kagaku Sangyo Co., Ltd., and
"NIKKA OCTHIX MANGANESE" (note 6): product name, manganese octylate, manganese content: 8%, manufactured by Nihon Kagaku Sangyo Co., Ltd.

Production of Phosphate Group-containing Resin (D2)

Production Example 14

A mixed solvent containing 27.5 parts of methoxypropanol and 27.5 parts of isobutanol was loaded into a reaction vessel including a temperature gauge, a thermostat, a stirrer, a reflux condenser, and a dropping device, and was heated to 110°C. Next, 121.5 parts of a mixture formed of 25 parts of styrene, 27.5 parts of n-butyl methacrylate, 20 parts of "Isostearyl Acrylate" (product name, manufactured by Osaka Organic Chemical Industry Ltd., branched higher alkyl acrylate), 7.5 parts of 4-hydroxybutyl acrylate, 15 parts of the following phosphate group-containing polymerizable monomer, 12.5 parts of 2-methacryloyloxyethyl acid phosphate, 10 parts of isobutanol, and 4 parts of t-butyl peroxyoctanoate was added to the above-mentioned mixed solvent over 4 hours. Further, a mixture formed of 0.5 part of t-butyl peroxyoctanoate and 20 parts of isopropanol was dropped into the resultant mixture for 1 hour. After that, the resultant mixture was stirred and aged for 1 hour to provide a phosphate group-containing acrylic resin solution (D21-1) having a solid content concentration of 50%. The resin had an acid value in terms of phosphate group of 83 mgKOH/g, a hydroxyl value of 29 mgKOH/g, and a weight-average molecular weight of 10,000.
Phosphate group-containing polymerizable monomer: 57.5 parts of monobutyl phosphoric acid and 41 parts of isobutanol were loaded into a reaction vessel including a temperature gauge, a thermostat, a stirrer, a reflux condenser, and a dropping device, and the temperature of the mixture was increased to 90°C. After that, 42.5 parts of glycidyl methacrylate was dropped into the mixture over 2 hours, and then the whole was further stirred and aged for 1 hour. After that, 59 parts of isopropanol was added to the aged product to provide a solution of a phosphate group-containing polymerizable monomer having a solid content concentration of 50%. The resultant monomer had an acid value in terms of phosphate group of 285 mgKOH/g.

Production of Coating Composition

Examples 1 to 11 and Comparative Examples 1 to 6

The hydroxy group-containing acrylic resin obtained in Production Example 1 described above, the organometallic catalysts formed of the zinc compounds and the amidine compounds, which had been obtained in Production Examples 2 to 10 described above, the other organometallic catalysts obtained in Production Examples 11 to 13 described above, the phosphate group-containing resin obtained in Production Example 14 described above, and raw materials shown in Table 3 to be shown later were used, and the materials were stirred and mixed with a blade-type stirring machine according to formulation shown in Table 3 to be shown later. Further, butyl acetate was added to the mixture to adjust its viscosity measured at 20°C with ANEST IWATA Viscosity Cup NK2 to 11 seconds. Thus, coating compositions Nos. 1 to 17 were obtained. The formulation of each of the coating compositions shown in Table 3 is a solid content mass ratio between the respective components.

Table 3

| | Example | | | | | |
|---|---|---|---|---|---|---|
| | 1 | 2 | 3 | 4 | 5 | 6 |
| Coating composition No. | 1 | 2 | 3 | 4 | 5 | 6 |

(continued)

| | | | Example | | | | | |
|---|---|---|---|---|---|---|---|---|
| | | | 1 | 2 | 3 | 4 | 5 | 6 |
| Hydroxy group-containing resin (A) | Hydroxy group-containing acrylic resin (A1) | Primary hydroxy group-containing acrylic resin (A11-1) | 65 | 65 | 65 | 65 | 65 | 65 |
| Polyisocyanate compound (B) | | "SUMIDUR N3300" (note 7) | 35 | 35 | 35 | 35 | 35 | 35 |
| Organometallic catalyst (C) formed of zinc compound and amidine compound | | Organometallic catalyst (C-1) | 1 | 1 | | | | |
| | | Organometallic catalyst (C-2) | | | 1 | | | |
| | | Organometallic catalyst (C-3) | | | | 1 | | |
| | | Organometallic catalyst (C-4) | | | | | 1 | |
| | | Organometallic catalyst (C-5) | | | | | | 1 |
| | | Organometallic catalyst (C-6) | | | | | | |
| | | Organometallic catalyst (C-7) | | | | | | |
| | | Organometallic catalyst (C-8) | | | | | | |
| | | Organometallic catalyst (C-9) | | | | | | |
| Other organometallic catalyst (E) | | Organometallic catalyst (E-1) | | | | | | |
| | | Organometallic catalyst (E-2) | | | | | | |
| | | Organometallic catalyst (E-3) | | | | | | |
| Phosphate group-containing compound (D) | Alkyl phosphate (D1) | "NACURE 4054J" (note 8) | 2 | 1 | 2 | 2 | 2 | 2 |
| | Phosphate group-containing resin (D2) | Phosphate group-containing acrylic resin solution (D21-1) | | | | | | |
| Pot life | | | 12 seconds | 13 seconds | 12 seconds | 12 seconds | 12 seconds | 13 seconds |
| NCO reaction ratio (%) | | | 86% | 88% | 85% | 83% | 84% | 88% |
| Knoop hardness | | | 12 | 14 | 12 | 12 | 11 | 13 |

Table 3 (continuation-1)

| | | | Example | | | | |
|---|---|---|---|---|---|---|---|
| | | | 7 | 8 | 9 | 10 | 11 |
| Coating composition No. | | | 7 | 8 | 9 | 10 | 11 |
| Hydroxy group-containing resin (A) | Hydroxy group-containing acrylic resin (A1) | Primary hydroxy group-containing acrylic resin (A11-1) | 65 | 65 | 65 | 65 | 65 |
| Polyisocyanate compound (B) | | "SUMIDUR N3300" (note 7) | 35 | 35 | 35 | 35 | 35 |
| Organometallic catalyst (C) formed of zinc compound and amidine compound | | Organometallic catalyst (C-1) | | | | | 1 |
| | | Organometallic catalyst (C-2) | | | | | |
| | | Organometallic catalyst (C-3) | | | | | |
| | | Organometallic catalyst (C-4) | | | | | |
| | | Organometallic catalyst (C-5) | | | | | |
| | | Organometallic catalyst (C-6) | 1 | | | | |
| | | Organometallic catalyst (C-7) | | 1 | | | |
| | | Organometallic catalyst (C-8) | | | 1 | | |
| | | Organometallic catalyst (C-9) | | | | 1 | |
| Other organometallic catalyst (E) | | Organometallic catalyst (E-1) | | | | | |
| | | Organometallic catalyst (E-2) | | | | | |
| | | Organometallic catalyst (E-3) | | | | | |
| Phosphate group-containing compound (D) | Alkyl phosphate (D1) | "NACURE 4054J" (note 8) | 2 | 2 | 2 | 2 | |
| | Phosphate group-containing resin (D2) | Phosphate group-containing acrylic resin solution (D21-1) | | | | | 2 |
| Pot life | | | 13 seconds | 12 seconds | 12 seconds | 13 seconds | 12 seconds |
| NCO reaction ratio (%) | | | 89% | 86% | 82% | 87% | 85% |
| Knoop hardness | | | 15 | 13 | 10 | 12 | 12 |

Table 3 (continuation-2)

| | | | Comparative Example | | | | | |
|---|---|---|---|---|---|---|---|---|
| | | | 1 | 2 | 3 | 4 | 5 | 6 |
| Coating composition No. | | | 12 | 13 | 14 | 15 | 16 | 17 |
| Hydroxy group-containing resin (A) | Hydroxy group-containing acrylic resin (A1) | Primary hydroxy group-containing acrylic resin (A11-1) | 65 | 65 | 65 | 65 | 65 | 65 |
| Polyisocyanate compound (B) | | "SUMIDUR N3300" (note 7) | 35 | 35 | 35 | 35 | 35 | 35 |
| Organometallic catalyst (C) formed of zinc compound and amidine compound | | Organometallic catalyst (C-1) | | | | 1 | | |
| | | Organometallic catalyst (C-2) | | | | | | |
| | | Organometallic catalyst (C-3) | | | | | | |
| | | Organometallic catalyst (C-4) | | | | | | |
| | | Organometallic catalyst (C-5) | | | | | | |
| | | Organometallic catalyst (C-6) | | | | | | |
| | | Organometallic catalyst (C-7) | | | | | | |
| | | Organometallic catalyst (C-8) | | | | | | |
| | | Organometallic catalyst (C-9) | | | | | | |
| Other organometallic catalyst (E) | | Organometallic catalyst (E-1) | 1 | | | | | |
| | | Organometallic catalyst (E-2) | | 1 | | | | |
| | | Organometallic catalyst (E-3) | | | 1 | | | |
| Phosphate group-containing compound (D) | Alkyl phosphate (D1) | "NACURE 4054J" (note 8) | 2 | 2 | 2 | | 2 | |
| | Phosphate group-containing resin (D2) | Phosphate group-containing acrylic resin solution (D21-1) | | | | | | |
| Pot life | | | 12 seconds | 11 seconds | 11 seconds | 19 seconds | 11 seconds | 11 seconds |
| NCO reaction ratio (%) | | | 75% | 70% | 68% | 92% | 67% | 63% |

(continued)

| | Comparative Example | | | | | |
|---|---|---|---|---|---|---|
| | 1 | 2 | 3 | 4 | 5 | 6 |
| Knoop hardness | 6 | 5 | 5 | 13 | 4 | 3 |

(Note 7) "SUMIDUR N3300": product name, manufactured by Sumika Covestro Urethane Co., Ltd., isocyanurate form of hexamethylene diisocyanate, solid content: 100%, and
(Note 8) "NACURE 4054J": product name, manufactured by King Industries, Inc., 2-ethylhexyl phosphate.

Pot Life

The pot life of each of the coating compositions Nos. 1 to 17 was evaluated by measuring the viscosity thereof at 20°C after its still standing at 20°C for 6 hours with ANEST IWATA Viscosity Cup NK2. The measurement results are summarized in Table 3. A viscosity after 6 hours of 13 seconds or less is regarded as being acceptable.

Production of Test Plate

A tinned iron plate was subjected to air spray coating with each of the coating compositions Nos. 1 to 17 so that its cured thickness became about 30 pm. The plate was heated at 80°C for 30 minutes so that the composition was cured, followed by still standing in a thermostatic chamber at 20°C for 24 hours. Thus, respective test plates were obtained.

NCO Reaction Ratio (%)

An NCO reaction ratio was evaluated as follows: an isocyanate peak intensity immediately after the formulation of a coating was measured with a FT-IR apparatus "FT/IR-420" (manufactured by JASCO Corporation) by a liquid membrane method; and the isocyanate peak intensity of the surface of a test plate was measured therewith by an ATR method. The respective isocyanate peak intensities ($2{,}271 \ cm^{-1}$) were measured, and the NCO reaction ratio (%) was determined by calculating a ratio between these intensities from the following equations. An NCO reaction ratio (%) of 80% or more is regarded as being acceptable. The measurement results are summarized in Table 3.

$$\text{NCO reaction ratio (\%)}=100-\text{NCO remaining ratio (\%)}$$

NCO remaining ratio (%)=(isocyanate peak intensity of test plate)/(isocyanate peak intensity immediately after formulation of coating)$\times$100

Knoop Hardness

The Knoop hardness of a coating film was measured with TUKON (manufactured by American Chain & Cable Company, Inc., micro hardness tester). The Knoop hardness represents the hardness of the coating film read from the size of a rhombic dent produced by pushing a quadrangular pyramid diamond indenter into the test surface of a material at a constant test load. A larger numerical value means a higher hardness. A Knoop hardness of 10 or more is regarded as being acceptable. The measurement results are summarized in Table 3.

The embodiments and Examples of the present invention have been specifically described above. However, the present invention is not limited to the above-mentioned embodiments, and various modifications based on the technical idea of the present invention are possible.

For example, configurations, methods, steps, shapes, materials, numerical values, and the like listed in the above-mentioned embodiments and Examples are merely examples, and configurations, methods, steps, shapes, materials, numerical values, and the like different therefrom may be optionally used.

**Claims**

1. A coating composition comprising:

    (A) a hydroxy group-containing resin;
    (B) a polyisocyanate compound;

(C) an organometallic catalyst formed of a zinc compound and an amidine compound; and
(D) a phosphate group-containing compound.

2. The coating composition according to claim 1, wherein the hydroxy group-containing resin (A) contains a hydroxy group-containing acrylic resin (A1).

3. The coating composition according to claim 2, wherein the hydroxy group-containing acrylic resin (A1) contains a primary hydroxy group-containing acrylic resin (A11).

4. The coating composition according to any one of claims 1 to 3, wherein the phosphate group-containing compound (D) contains an alkyl phosphate (D1) and/or a phosphate group-containing resin (D2).

5. A coating film forming method comprising:

coating a top of a material to be coated with the coating composition of any one of claims 1 to 4 to form a coating film; and
then heating the coating film to cure the coating film.

## INTERNATIONAL SEARCH REPORT

International application No.

**PCT/JP2023/005646**

### A. CLASSIFICATION OF SUBJECT MATTER

*C09D 133/14*(2006.01)i; *C09D 201/06*(2006.01)i; *C09D 7/63*(2018.01)i
FI:   C09D133/14; C09D201/06; C09D7/63

According to International Patent Classification (IPC) or to both national classification and IPC

### B. FIELDS SEARCHED

Minimum documentation searched (classification system followed by classification symbols)

C09D1/00-10/00,101/00-201/10,B05D1/00-7/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-155544 A (BASF COATINGS GMBH) 27 August 2015 (2015-08-27) claims, paragraph [0008] | 1-5 |
| A | JP 2016-539194 A (BASF COATINGS GMBH) 15 December 2016 (2016-12-15) claims, paragraph [0144] | 1-5 |
| A | JP 2014-513165 A (BASF COATINGS GMBH) 29 May 2014 (2014-05-29) claims | 1-5 |
| A | JP 2015-28136 A (KANSAI PAINT CO., LTD.) 12 February 2015 (2015-02-12) claims, paragraph [0095] | 1-5 |
| A | JP 11-116847 A (KANEGAFUCHI CHEM. IND. CO., LTD.) 27 April 1999 (1999-04-27) claims, paragraph [0116] | 1-5 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **23 March 2023** | **04 April 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2023/005646**

| Patent document cited in search report | | | Publication date (day/month/year) | Patent family member(s) | | | Publication date (day/month/year) |
|---|---|---|---|---|---|---|---|
| JP | 2015-155544 | A | 27 August 2015 | US | 2012/0100380 | A1 | |
| | | | | claims, paragraph [0008] | | | |
| | | | | WO | 2010/149236 | A1 | |
| | | | | EP | 2445948 | A1 | |
| | | | | CA | 2759413 | A | |
| | | | | MX | 2011012166 | A | |
| | | | | KR | 10-2012-0102498 | A | |
| | | | | CN | 102803330 | A | |
| | | | | RU | 2012102103 | A | |
| | | | | ES | 2444518 | T | |
| | | | | BR | PI1014324 | A | |
| | | | | PL | 2445948 | T | |
| JP | 2016-539194 | A | 15 December 2016 | US | 2016/0215162 | A1 | |
| | | | | claims, paragraph [0208] | | | |
| | | | | WO | 2015/039807 | A1 | |
| | | | | EP | 2851403 | A1 | |
| | | | | CA | 2921135 | A | |
| | | | | CN | 105593319 | A | |
| | | | | KR | 10-2016-0060082 | A | |
| | | | | MX | 2016003523 | A | |
| | | | | RU | 2016115792 | A | |
| | | | | ES | 2674529 | T | |
| JP | 2014-513165 | A | 29 May 2014 | US | 2014/0322448 | A1 | |
| | | | | claims | | | |
| | | | | WO | 2012/123198 | A1 | |
| | | | | EP | 2686361 | A1 | |
| | | | | AU | 2012228605 | A | |
| | | | | MX | 2013008085 | A | |
| | | | | ES | 2526790 | T | |
| | | | | PL | 2686361 | T | |
| | | | | BR | 112013022041 | A | |
| JP | 2015-28136 | A | 12 February 2015 | (Family: none) | | | |
| JP | 11-116847 | A | 27 April 1999 | (Family: none) | | | |

Form PCT/ISA/210 (patent family annex) (January 2015)

**REFERENCES CITED IN THE DESCRIPTION**

**Patent documents cited in the description**

- JP 2002338885 A

- WO 201304720 A1

**Non-patent literature cited in the description**

- Polymer Handbook, vol. III, 139-179